# EUROPÄISCHE PATENTSCHRIFT

(11) **EP 2 683 567 B1**
(45) Veröffentlichungstag und Bekanntmachung des Hinweises auf die Patenterteilung: **24.08.2016**
(21) Anmeldenummer: 12702498.2
(22) Anmeldetag: 01.02.2012
(51) Int. Cl.: B60K 6/442, B60K 6/547, B60K 6/387, B60W 30/19, B60K 6/48, F16H 3/00, F16H 3/089

(54) **HYBRIDANTRIEB EINES KRAFTFAHRZEUGS UND VERFAHREN ZUR STEUERUNG EINES HYBRIDANTRIEBS**
HYBRID DRIVE OF A MOTOR VEHICLE AND METHOD FOR CONTROLLING A HYBRID DRIVE
ENTRAÎNEMENT HYBRIDE DE VÉHICULE À MOTEUR ET PROCÉDÉ DE COMMANDE D'UN ENTRAÎNEMENT HYBRIDE

(30) Priorität: 11.03.2011 DE 102011005451
(43) Veröffentlichungstag der Anmeldung: 15.01.2014
(73) Patentinhaber: ZF Friedrichshafen AG, 88046 Friedrichshafen (DE)
(72) Erfinder: KALTENBACH, Johannes, 88048 Friedrichshafen (DE); GRIESMEIER, Uwe, 88677 Markdorf (DE)
(86) Internationale Anmeldenummer: PCT/EP2012/051626
(87) Internationale Veröffentlichungsnummer: WO 2012/123168

(56) Entgegenhaltungen:
- DE-A1- 3 546 454
- DE-A1-102005 048 938
- DE-A1-102005 049 992
- DE-A1-102006 036 758
- FR-A1- 2 811 395

## Beschreibung

Die Erfindung betrifft einen Hybridantrieb eines Kraftfahrzeugs, der ein automatisiertes Schaltgetriebe mit zwei Eingangswellen und einer gemeinsamen Ausgangswelle umfasst, dessen erste Eingangswelle über eine Trennkupplung mit der Triebwelle eines Verbrennungsmotors verbindbar und über eine erste Gruppe selektiv schaltbarer Gangradsätze mit der Ausgangswelle in Triebverbindung bringbar ist, dessen zweite Eingangswelle mit dem Rotor einer als Motor und als Generator betreibbaren Elektromaschine in Triebverbindung steht und über eine zweite Gruppe selektiv schaltbarer Gangradsätze mit der Ausgangswelle in Triebverbindung bringbar ist, und dessen Eingangswellen über ein einrückbares und ausrückbares Koppel-Schaltelement miteinander koppelbar sind, wobei eine als Motor und als Generator betreibbare zweite Elektromaschine vorgesehen ist, deren Rotor unmittelbar oder über eine Eingangsgetriebestufe mit der ersten Eingangswelle in Triebverbindung steht. Die Erfindung betrifft außerdem ein Verfahren zur Steuerung eines derartigen Hybridantriebs, mit dem ein Gangwechsel in dem Schaltgetriebe während eines Elektrofahrbetriebs ohne Zugkraftunterbrechung durchführbar ist.

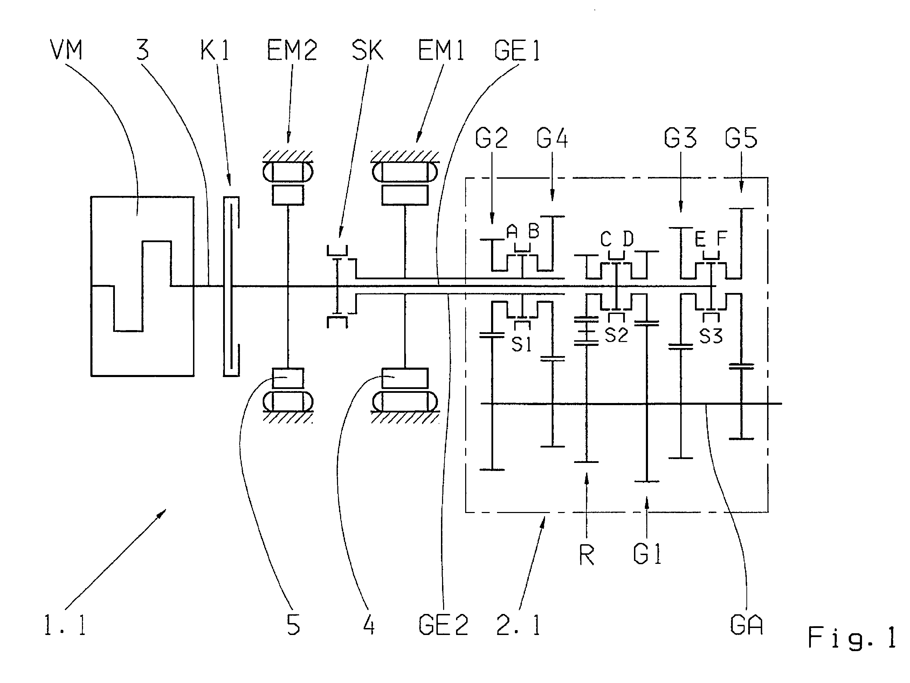

In der DE 199 60 621 B4 ist ein derartiger Hybridantrieb mit drei Ausführungsformen eines Schaltgetriebes beschrieben. In allen Varianten weist der verbrennungsmotorische Kraftübertragungszweig des Schaltgetriebes eine erste Vorgelegewelle auf, die eingangsseitig über eine Eingangskonstante, eine erste Eingangswelle, und eine Reibungskupplung mit der Triebwelle eines Verbrennungsmotors sowie ausgangsseitig über eine erste Gruppe selektiv schaltbarer Gangradsätze mit einer Ausgangswelle in Triebverbindung bringbar ist. In der ersten Ausführungsvariante nach der dortigen Fig. 1 ist eine zweite Eingangswelle als eine zweite Vorgelegewelle ausgebildet, die drehfest mit dem Rotor einer Elektromaschine verbunden und über eine zweite Gruppe selektiv schaltbarer Gangradsätze mit der Ausgangswelle in Triebverbindung bringbar ist. Das eingangs genannte Koppel-Schaltelement ist in diesem Fall als eine Schaltkupplung ausgebildet, die zwischen dem vorgelegeseitigen Triebrad einer zwischen der ersten Eingangswelle und der zweiten Vorgelegewelle angeordneten Triebstufe und der zweiten Vorgelegewelle angeordnet ist.

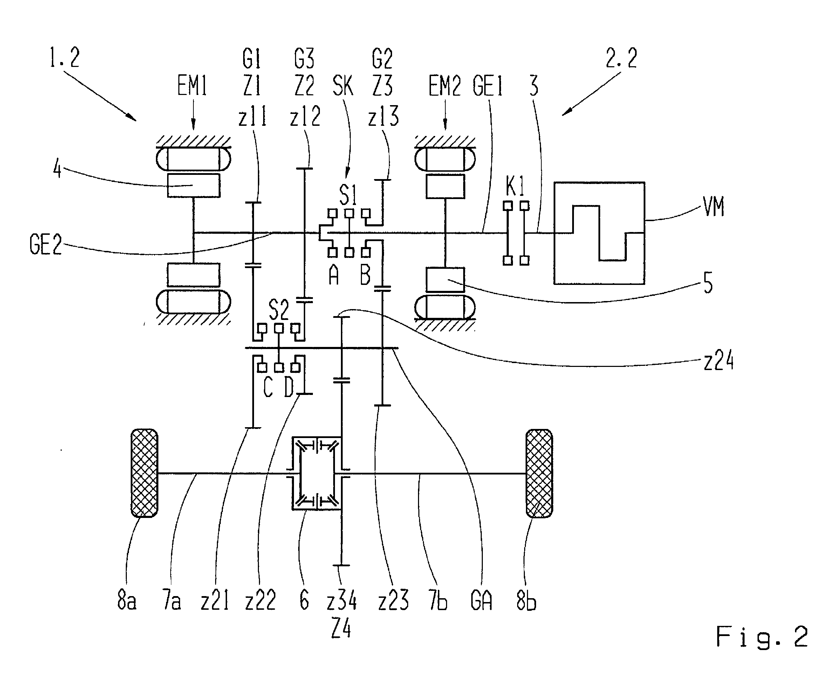

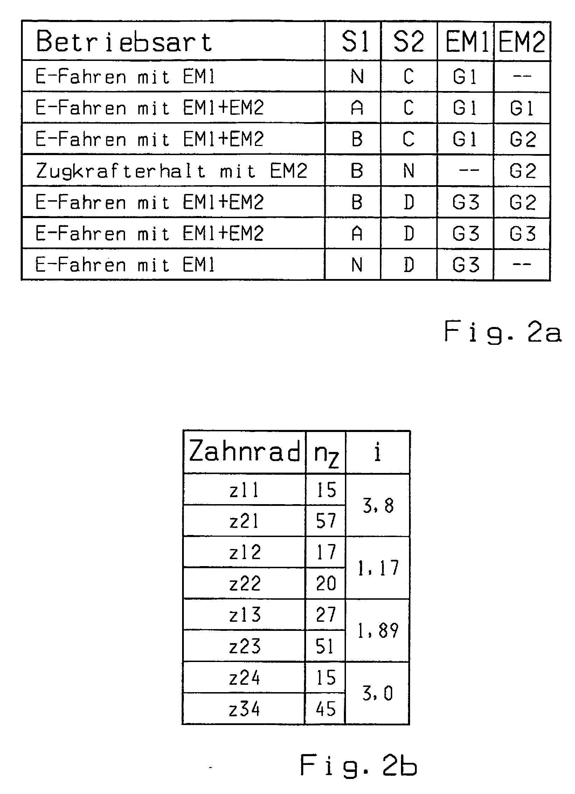

In der zweiten und dritten Ausführungsform nach den dortigen Figuren 2 und 3 ist die zweite Eingangswelle als eine hohle Rotorwelle ausgebildet, die koaxial über der ersten Eingangswelle angeordnet und drehfest mit dem Rotor einer koaxial über der ersten Eingangswelle angeordneten Elektromaschine verbunden ist. Die Rotorwelle steht über eine zweite Eingangskonstante mit der zweiten Vorgelegewelle in Triebverbindung, die über die zweite Gruppe selektiv schaltbarer Gangradsätze mit der Ausgangswelle in Triebverbindung bringbar ist. Das Koppel-Schaltelement ist in diesem Fall als eine Schaltkupplung ausgebildet, die zwischen der ersten Eingangswelle und der Rotorwelle angeordnet ist.

Bei einem weiteren derartigen Hybridantrieb gemäß der WO 2008/138 387 A1 sind die beiden Eingangswellen des betreffenden Schaltgetriebes als Vorgelegewellen ausgebildet. Die erste Eingangs- bzw. Vorgelegewelle des verbrennungsmotorischen Kraftübertragungszweiges ist eingangsseitig über eine steuerbare Trennkupplung mit der Triebwelle eines Verbrennungsmotors verbindbar und ausgangsseitig über eine erste Gruppe selektiv schaltbarer Gangradsätze mit einer Ausgangswelle in Triebverbindung bringbar. Die zweite Eingangs- bzw. Vorgelegewelle des elektromotorischen Kraftübertragungszweiges ist eingangsseitig drehfest mit dem Rotor einer Elektromaschine verbunden und ausgangsseitig über eine zweite Gruppe selektiv schaltbarer Gangradsätze mit der Ausgangswelle in Triebverbindung bringbar. Die Gangradsätze beider Gruppen sind in gemeinsamen Radialebenen angeordnet und nutzen jeweils ein gemeinsames, auf der Ausgangswelle angeordnetes Abtriebsrad. Die Losräder und die zugeordneten, in einem Schaltpaket zusammengefassten Gangkupplungen von zwei axial benachbarten Gangradsätzen der zweiten Gruppe sind auf der Ausgangswelle angeordnet. Hierdurch sind die Gangkupplungen der dieselben Losräder nutzenden Gangradsätze der ersten Gruppe zugleich als Koppel-Schaltelemente wirksam, über welche jeweils die Kopplung beider Eingangswellen unabhängig von der Schaltung eines der betreffenden Gangradsätze möglich ist.

Aus der DE102005048938A1 ist zusätzlich ein Doppelkupplungsgetriebe für ein Kraftfahrzeug, insbesondere mit einem Hybridantrieb, mit einer ersten

Getriebeeingangswelle und mit einer zweiten Getriebeeingangswelle, wobei die erste Getriebeeingangswelle über eine erste Kupplung und die zweite Getriebeeingangswelle über eine zweite Kupplung mit einem Verbrennungsmotor, insbesondere mit einer Kurbelwelle des Verbrennungsmotors wirksam verbindbar sind, wobei mehrere einlegbare und/oder herausnehmbare Gangstufen vorgesehen sind, wobei die aufeinanderfolgenden Gangstufen unterschiedlichen Getriebeeingangswellen zugeordnet sind, insbesondere die erste, dritte und/oder fünfte Gangstufe der ersten Getriebeeingangswelle und die zweite, vierte und/oder sechste Gangstufe der zweiten Getriebeeingangswelle zugeordnet sind, wobei mindestens eine erste Elektromaschine vorgesehen ist und die Elektromaschine als Elektromotor und/oder Generator betreibbar ist und wobei die Elektromaschine mit einer der Getriebeeingangswellen wirksam drehbar verbindbar ist, bekannt. Das Doppelkupplungsgetriebe ist dadurch optimiert, dass die Elektromaschine über ein zusätzlich vorgesehenes Getriebe sowohl mit der ersten als auch mit der zweiten Getriebeeingangswelle wirksam verbindbar ist.

Die DE3546454A1 offenbart ein Gangschaltgetriebe für ein Kraftfahrzeug mit Doppelkupplung, mit einer von einer ersten Kupplungsscheibe ausgehenden Zentralwelle zum Antrieb einer ersten Gruppe von Getriebegängen und einer kürzeren, zur Zentralwelle konzentrischen, von einer zweiten Kupplungsscheibe ausgehenden Hohlwelle zum Antrieb einer zweiten Gruppe von Getriebegängen, wobei die Hohlwelle und die Zentralwelle durch eine dazwischen angeordnete, schaltbare Kupplung drehfest miteinander verbindbar
sind.

Aus der DE102006036758A1 ist ein automatisiertes Doppelkupplungsgetriebe eines Kraftfahrzeuges, mit zwei koaxial oder achsparallel angeordneten Eingangswellen , mit mindestens einer achsparallel zu den Eingangswellen angeordneten Abtriebswelle und mit unsynchronisierten Gangskupplung, wobei jeder der Eingangswellen zur Verbindung mit der Antriebswelle eines Antriebsmotors jeweils eine separate Motorkupplung und zur Verbindung mit der Abtriebswelle jeweils eine Gruppe von unterschiedlich übersetzten Gang-Zahnradsätzen mit jeweils einem Festrad und einem über eine zugeordnete Gangkupplung schaltbaren Losrad zuge ordnet sind, bekannt. Zur Vereinfachung des Aufbaus und der Steuerbarkeit als unsynchronisierte Klauenkupplungittel sind zwei Elektromaschinen vorgesehen, die wechselweise jeweils mit einer der beiden Eingangswellen in Triebverbindung stehen.

Aus der nicht vorveröffentlichten DE 10 2010 030 569 A1 sind verschiedene Ausführungsformen eines gattungsgemäßen Hybridantriebs bekannt, bei dem das betreffende Schaltgetriebe aus einem Doppelkupplungsgetriebe mit zwei koaxial angeordneten. Eingangswellen abgeleitet ist. Wähnend die zentral angeordnete erste Eingangswelle über eine Trennkupplung mit der Triebwelle des Verbrennungsmotors verbindbar ist, steht die als Hohlwelle ausgebildete und koaxial über der ersten Eingangswelle angeordnete zweite Eingangswelle unmittelbar oder über eine Eingangsgetriebestufe mit dem Rotor der Elektromaschine in Triebverbindung. Das Koppel-Schaltelement zur Kopplung der beiden Eingangswellen ist als eine Reibungskupplung oder als eine Klauenkupplung ausgebildet und getriebeextern unmittelbar zwischen den beiden Eingangswellen angeordnet.

Der vorliegend betrachtete Hybridantrieb kann demzufolge mit unterschiedlich aufgebauten Schaltgetrieben realisiert sein. Allen Ausführungsformen von Schaltgetrieben ist jedoch gemeinsam, dass sie jeweils einen verbrennungsmotorischen Kraftübertragungszweig und einen elektromotorischen Kraftübertragungszweig aufweisen, die an der Ausgangswelle zusammengeführt sind. Der verbrennungsmotorische Kraftübertragungszweig umfasst jeweils die erste Eingangswelle, die Gangradsätze der ersten Gruppe sowie die Ausgangswelle und ermöglicht die Übertragung eines Drehmoments zwischen dem Verbrennungsmotor und den mit der Ausgangswelle in Triebverbindung stehenden Antriebsrädern des Kraftfahrzeugs. Der elektromotorische Kraftübertragungszweig umfasst jeweils die zweite Eingangswelle, die Gangradsätze der zweiten Gruppe sowie die Ausgangswelle und ermöglicht die Übertragung eines Drehmoments zwischen der Elektromaschine und den Antriebsrädern des Kraftfahrzeugs.

Bei geöffnetem Koppel-Schaltelement ist bei diesem Typ von Hybridantrieb somit über einen geschalteten Gangradsatz der ersten Gruppe ein rein verbrennungsmotorischer Fahrbetrieb, über einen geschalteten Gangradsatz der zweiten Gruppe ein rein elektromotorischer Fahrbetrieb, sowie über jeweils einen geschalteten Gangradsatz der ersten und der zweiten Gruppe ein Kombinationsfahrbetrieb beider Aggregate (Verbrennungsmotor und Elektromaschine) mit einem motorischen oder generatorischen Betrieb der Elektromaschine möglich.

Auch können Gangwechsel innerhalb einer Gruppe von Gangradsätzen als Lastschaltungen durchgeführt werden, indem die Zugkraft während des Gangwechsels durch das der anderen Gruppe von Gangradsätzen zugeordnete Aggregat (Verbrennungsmotor oder Elektromaschine) über einen dort geschalteten Gangradsatz zumindest teilweise aufrecht erhalten wird.

Durch das Schließen des Koppel-Schaltelementes kann der Verbrennungsmotor bei stehendem Kraftfahrzeug mittels der Elektromaschine gestartet werden. Zudem werden durch das Schließen des Koppel-Schaltelementes die Gangradsätze der zweiten Gruppe für den verbrennungsmotorischen Fahrbetrieb und die Gangradsätze der ersten Gruppe für den elektromotorischen Fahrbetrieb verfügbar gemacht. Bei entsprechender Übersetzung und Zuordnung der Gangradsätze werden somit insgesamt weniger Gangradsätze benötigt, und das Schaltgetriebe kann entsprechend einfacher sowie kompakter ausgeführt sein.

Nachteilig an diesen bekannten Hybridantrieben ist jedoch, dass ein Gangwechsel in dem Schaltgetriebe während eines Elektrofahrbetriebs, d.h. bei abgestelltem und/oder durch Öffnen der Trennkupplung abgekoppeltem Verbrennungsmotor, zwangsläufig mit einer Zugkraftunterbrechung verbunden ist, welches zu unerwünschten Komfort- und Dynamikeinbußen führt. Zudem können die Gangkupplungen der Gangradsätze der ersten Gruppe während eines Elektrofahrbetriebs nicht fremdsynchronisiert werden und müssen daher als Synchronkupplungen ausgeführt sein.

Der vorliegenden Erfindung liegt daher die Aufgabe zugrunde, den Hybridantrieb der eingangs genannten Art mit geringem Aufwand im Hinblick auf verbesserte Betriebseigenschaften weiterzubilden, so dass insbesondere ein Gangwechsel in dem Schaltgetriebe auch im Elektrofahrbetrieb ohne Zugkraftunterbrechung durchführbar ist. Außerdem soll ein Verfahren zur Steuerung eines derartigen Hybridantriebs angegeben werden, mit dem ein Gangwechsel in dem Schaltgetriebe während eines Elektrofahrbetriebs ohne Zugkraftunterbrechung durchführbar ist.

Die den Hybridantrieb betreffende Aufgabe ist in Verbindung mit den Merkmalen des Oberbegriffs des Anspruchs 1 dadurch gelöst, dass die zweite Elektromaschine als ein Starter-Generator ausgebildet ist, der leistungsschwächer als die erste Elektromaschine ausgebildet und nur kurzzeitig als Motor betreibbar ist.

Vorteilhafte Ausgestaltungen und Weiterbildungen des erfindungsgemäßen Hybridantriebs sind Gegenstand des zugeordneten Unteranspruchs 2.

Die Erfindung geht demnach aus von einem an sich bekannten Hybridantrieb eines Kraftfahrzeugs, der ein automatisiertes Schaltgetriebe mit zwei Eingangswellen und einer gemeinsamen Ausgangswelle aufweist. Die erste Eingangswelle des Schaltgetriebes ist über eine Trennkupplung mit der Triebwelle eines Verbrennungsmotors VM verbindbar und über eine erste Gruppe selektiv schaltbarer Gangradsätze mit der Ausgangswelle in Triebverbindung bringbar. Die zweite Eingangswelle des Schaltgetriebes steht mit dem Rotor einer als Motor und als Generator betreibbaren Elektromaschine in Triebverbindung und ist über eine zweite Gruppe selektiv schaltbarer Gangradsätze mit der Ausgangswelle in Triebverbindung bringbar. Beide Eingangswellen sind über ein einrückbares und ausrückbares Koppel-Schaltelement miteinander koppelbar. Zur Verbesserung der Betriebseigenschaften des Hybridantriebs ist gemäß der Erfindung eine als Motor und als Generator betreibbare zweite Elektromaschine vorhanden, deren Rotor mit der ersten Eingangswelle in Triebverbindung steht.

Mittels der zweiten Elektromaschine können die Gangkupplungen der Gangradsätze der ersten Gruppe bei geöffneter Trennkupplung und ausgerücktem Koppel-Schaltelement synchronisiert werden und demzufolge als kostengünstige Klauenkupplungen ausgeführt sein. Der wesentliche Vorteil der zweiten Elektromaschine besteht jedoch darin, dass ein Gangwechsel in dem Schaltgetriebe während eines Elektrofahrbetriebs, d.h. bei abgestelltem und/oder durch Öffnen der Trennkupplung abgekoppeltem Verbrennungsmotor, ohne Zugkraftunterbrechung durchführbar ist, indem die zweite Elektromaschine während des Gangwechsels ein Drehmoment abgibt und über einen geschalteten Gangradsatz auf die Ausgangswelle überträgt.

Die zweite Elektromaschine ist bevorzugt als ein Starter-Generator ausgebildet, der leistungsschwächer als die erste Elektromaschine ausgelegt und nur kurzzeitig als Motor betreibbar ist, da für diese Funktionen ohnehin mindestens ein Aggregat erforderlich ist, und der Bauraumbedarf sowie ein mögliches Mehrgewicht somit gering ausfallen.

Der Rotor der zweiten Elektromaschine kann unmittelbar oder über eine Eingangsgetriebestufe mit der ersten Eingangswelle in Triebverbindung stehen. Während die zweite Elektromaschine bei einer unmittelbaren Triebverbindung des Rotors koaxial über der ersten Eingangswelle angeordnet ist, ist bei einer mittelbaren Triebverbindung über eine Eingangsgetriebestufe sowohl eine koaxiale als auch eine achsparallele Anordnung der zweiten Elektromaschine zu der ersten Eingangswelle möglich.

Weiter betrifft die Erfindung ein Steuerungsverfahren für einen Hybridantrieb eines Kraftfahrzeugs, der ein automatisiertes Schaltgetriebe mit zwei Eingangswellen und eine gemeinsamen Ausgangswelle aufweist, dessen erste Eingangswelle über eine Trennkupplung mit der Triebwelle eines Verbrennungsmotors verbindbar und über eine erste Gruppe selektiv schaltbarer Gangradsätze mit der Ausgangswelle in Triebverbindung bringbar ist, dessen zweite Eingangswelle mit dem Rotor einer als Motor und als Generator betreibbaren Elektromaschine in Triebverbindung steht und über eine zweite Gruppe selektiv schaltbarer Gangradsätze mit der Ausgangswelle in Triebverbindung bringbar ist, und dessen Eingangswellen über ein einrückbares und ausrückbares Koppel-Schaltelement miteinander koppelbar sind, wobei ein Gangwechsel in dem Schaltgetriebe während eines Elektrofahrbetriebs ohne Zugkraftunterbrechung erfolgt. Hierzu ist gemäß der Erfindung vorgesehen, dass während des Gangwechsels eine als Motor und als Generator betreibbare zweite Elektromaschine, deren Rotor mit der ersten Eingangswelle in Triebverbindung steht, bei geöffnetem Koppel-Schaltelement über einen eingelegten Gangradsatz der ersten Gruppe zumindest kurzzeitig ein Drehmoment auf die Ausgangswelle überträgt.

Hierdurch wird eine schaltungsbedingte Zugkraftunterbrechung während des Elektrofahrbetriebs vermieden und der Fahrkomfort sowie die Fahrdynamik entsprechend verbessert.

Vorteilhafte Ausgestaltungen und Weiterbildungen des Steuerungsverfahrens gemäß der Erfindung sind in den zugeordneten Unteransprüchen definiert.

Nachfolgend werden zunächst konkrete Schaltungsabläufe angegeben, die in Ausgestaltung des vorgenannten Verfahrens während eines Elektrofahrbetriebs mit der ersten Elektromaschine zur Anwendung kommen können. Dabei wird von einer relativ leistungsschwachen und nur für einen kurzzeitigen Motorbetrieb geeigneten zweiten Elektromaschine ausgegangen, so dass das betreffende Kraftfahrzeug vor und nach dem Gangwechsel jeweils von der ersten Elektromaschine angetrieben wird.

So ist vorgesehen, dass bei einem Elektrofahrbetrieb mit der ersten Elektromaschine in einem Last-Gangradsatz (z.B. G2; Z1) der zweiten Gruppe ein Gangwechsel in einen Ziel-Gangradsatz (z.B. G3; Z3) der ersten Gruppe mit den folgenden Schritten erfolgt:
a) Ausrücken des Koppel-Schaltelementes, sofern dieses eingerückt ist,
b) Synchronisieren der Gangkupplung (E; B) des Ziel-Gangradsatzes (G3; Z3) mittels der zweiten Elektromaschine,
c) Einrücken der Gangkupplung (E; B) des Ziel-Gangradsatzes (G3; Z3),
d) zeitgleicher Lastabbau an der ersten Elektromaschine und Lastaufbau an der zweiten Elektromaschine,
e) Ausrücken der Gangkupplung (A; C) des Last-Gangradsatzes (G2; Z1),
f) Synchronisieren des Koppel-Schaltelementes mittels der ersten Elektromaschine,
g) Einrücken des Koppel-Schaltelementes, und
h) zeitgleicher Lastabbau an der zweiten Elektromaschine und Lastaufbau an der ersten Elektromaschine.

Bei einem Elektrofahrbetrieb mit der ersten Elektromaschine in einem Last-Gangradsatz (z.B. G3; Z3) der ersten Gruppe erfolgt ein Gangwechsel in einen Ziel-Gangradsatz (z.B. G4; Z2) der zweiten Gruppe dagegen mit den folgenden Schritten:
a) Zeitgleicher Lastabbau an der ersten Elektromaschine und Lastaufbau an der zweiten Elektromaschine,
b) Ausrücken des Koppel-Schaltelementes,
c) Synchronisieren der Gangkupplung (B; D) des Ziel-Gangradsatzes (G4; Z2) mittels der ersten Elektromaschine,
d) Einrücken der Gangkupplung (B; D) des Ziel-Gangradsatzes (G4; Z2),
e) zeitgleicher Lastabbau an der zweiten Elektromaschine und Lastaufbau an der ersten Elektromaschine, und
f) Ausrücken der Gangkupplung (E; B) des Last-Gangradsatzes (G3; Z3).

Wenn bei einem Elektrofahrbetrieb mit der ersten Elektromaschine in einem Last-Gangradsatz (z.B. G2; Z1) der zweiten Gruppe ein Gangwechsel in einen Ziel-Gangradsatz (z.B. G4; Z2) der zweiten Gruppe erfolgen soll, sind die folgenden Schritte vorgesehen:
a) Ausrücken des Koppel-Schaltelementes, sofern dieses eingerückt ist,
b) Synchronisieren der Gangkupplung (E; B) eines Zwischen-Gangradsatzes (z.B. G3; Z3) der ersten Gruppe mittels der zweiten Elektromaschine,
c) Einrücken der Gangkupplung (E; B) des Zwischen-Gangradsatzes (G3; Z3),
d) zeitgleicher Lastabbau an der ersten Elektromaschine EM1 und Lastaufbau an der zweiten Elektromaschine,
e) Ausrücken der Gangkupplung (A; C) des Last-Gangradsatzes (G2; Z1),
f) Synchronisieren der Gangkupplung (B; D) des Ziel-Gangradsatzes (G4; Z2) mittels der ersten Elektromaschine,
g) Einrücken der Gangkupplung (B; D) des Ziel-Gangradsatzes (G4; Z2),
h) zeitgleicher Lastabbau an der zweiten Elektromaschine und Lastaufbau an der ersten Elektromaschine, und
i) Ausrücken der Gangkupplung (E; B) des Zwischen-Gangradsatzes (G3; Z3).

Schließlich ist vorgesehen, dass bei einem Elektrofahrbetrieb mit der ersten Elektromaschine in einem Last-Gangradsatz (z.B. G3) der ersten Gruppe ein Gangwechsel in einen Ziel-Gangradsatz (z.B. G5) der ersten Gruppe mit den folgenden Schritten erfolgt:
a) Zeitgleicher Lastabbau an der ersten Elektromaschine und Lastaufbau an der zweiten Elektromaschine,
b) Ausrücken des Koppel-Schaltelementes,
c) Synchronisieren der Gangkupplung (B) eines Zwischen-Gangradsatzes (z.B. G4) der zweiten Gruppe mittels der ersten Elektromaschine,
d) Einrücken der Gangkupplung (B) des Zwischen-Gangradsatzes (G4),
e) Zeitgleicher Lastabbau an der zweiten Elektromaschine und Lastaufbau an der ersten Elektromaschine,
f) Ausrücken der Gangkupplung (E) des Last-Gangradsatzes (G3),
g) Synchronisieren der Gangkupplung (F) des Ziel-Gangradsatzes (G5) mittels der zweiten Elektromaschine,
h) Einrücken der Gangkupplung (F) des Ziel-Gangradsatzes (G5),
i) zeitgleicher Lastabbau an der ersten Elektromaschine und Lastaufbau an der zweiten Elektromaschine,
j) Ausrücken der Gangkupplung (B) des Zwischen-Gangradsatzes (G4),
k) Synchronisieren des Koppel-Schaltelementes mittels der ersten Elektromaschine,
l) Einrücken des Koppel-Schaltelementes, und
m) zeitgleicher Lastabbau an der zweiten Elektromaschine und Lastaufbau an der ersten Elektromaschine.

Neben einer zumindest kurzzeitigen Unterstützung der ersten Elektromaschine durch die zweite Elektromaschine im Boost-Betrieb und im Elektrofahrbetrieb kann die zweite Elektromaschine auch zum Starten des Verbrennungsmotors während eines Elektrofahrbetriebs genutzt werden. Dies erfolgt sehr komfortabel bevorzugt derart, dass bei einem Elektrofahrbetrieb mit der ersten Elektromaschine in einem Gangradsatz der zweiten Gruppe das Starten des Verbrennungsmotors bei ausgerücktem Koppel-Schaltelement und geschlossener Trennkupplung mittels der zweiten Elektromaschine erfolgt. Dieser Startvorgang des Verbrennungsmotors ist von den Fahrzeuginsassen kaum wahrnehmbar, da die zweite Elektromaschine und der Verbrennungsmotor dabei von der Ausgangswelle des Schaltgetriebes mechanisch entkoppelt sind.

Wenn die Trennkupplung als eine Reibungskupplung ausgebildet ist, kann das Starten des Verbrennungsmotors auch als Impulsstart, d.h. mit anfänglichem Hochdrehen der ersten Eingangswelle durch die zweite Elektromaschine und mit anschließendem schnellen Schließen der Trennkupplung, durchgeführt werden.

Ebenso ist mit der zweiten Elektromaschine ein serieller Hybridfahrbetrieb möglich, d.h. ein Fahrbetrieb ohne eine mechanische Verbindung der Triebwelle des Verbrennungsmotors mit der Ausgangswelle des Schaltgetriebes, bei dem die zweite Elektromaschine bei ausgerücktem Koppel-Schaltelement und geschlossener Trennkupplung im Generatorbetrieb von dem Verbrennungsmotor angetrieben wird, und die erste Elektromaschine im Motorbetrieb über einen geschalteten Gangradsatz der zweiten Gruppe die Ausgangswelle antreibt.

Zur Verdeutlichung der Erfindung ist der Beschreibung eine Zeichnung mit Ausführungsbeispielen beigefügt. In dieser zeigt
- Fig. 1: einen ersten Hybridantrieb eines Kraftfahrzeugs in einer schematischen Darstellung,
- Fig. 2: einen zweiten Hybridantrieb eines Kraftfahrzeugs in einer schematischen Darstellung,
- Fig. 2a: ein Betriebs- und Schaltschema des Hybridantriebs gemäß Fig. 2 für einen Elektrofahrbetrieb in Form einer Tabelle, und
- Fig. 2b: Übersetzungsbeispiele der Gangradsätze des Hybridantriebs gemäß Fig. 2 in Form einer Tabelle.

In Fig. 1 ist in schematischer Form ein gemäß der Erfindung ausgebildeter Hybridantrieb 1.1 mit einem Schaltgetriebe 2.1 gezeigt, welches aus einem Doppelkupplungsgetriebe mit zwei koaxial angeordneten Eingangswellen GE1, GE2 und einer gemeinsamen Ausgangswelle GA abgeleitet ist. Die zentral angeordnete erste Eingangswelle GE1 ist über eine vorliegend beispielhaft als Reibungskupplung ausgebildete Trennkupplung K1 mit der Triebwelle 3 eines Verbrennungsmotors VM verbindbar. Die als Hohlwelle ausgebildete und koaxial über der ersten Eingangswelle GE1 angeordnete zweite Eingangswelle GE2 steht unmittelbar mit dem Rotor 4 einer ersten Elektromaschine EM1 in Triebverbindung. Getriebeintern sind beide Eingangswellen GE1, GE2 jeweils über mehrere selektiv schaltbare Gangradsätze R, G1, G3, G5 bzw. G2, G4 mit der Ausgangswelle GA in Triebverbindung bringbar.

Vorliegend sind der ersten Eingangswelle GE1 der Umkehr-Gangradsatz R des Rückwärtsgangs und die Gangradsätze G1, G3, G5 der ungeraden Vorwärtsgänge zugeordnet. Der zweiten Eingangswelle GE2 sind die Gangradsätze G2, G4 der geraden Vorwärtsgänge zugeordnet. Die Losräder und die Gangkupplungen A, B, C, D, E, F der Gangradsätze R, G1, G3, G5 bzw. G2, G4 sind jeweils auf der zugeordneten Eingangswelle GE1, GE2 angeordnet, wogegen die betreffenden Festräder jeweils drehfest auf der Ausgangswelle GA angeordnet sind. Die Gangkupplungen A bis F sind jeweils paarweise in einem gemeinsamen Schaltpaket S1, S2, S3 zusammengefasst. So sind die Gangkupplungen A und B der Gangradsätze G2, G4 des zweiten und des vierten Vorwärtsgangs in einem ersten Schaltpaket S1, die Gangkupplungen C, D des Umkehr-Gangradsatzes R des Rückwärtsgangs und des Gangradsatzes G1 des ersten Vorwärtsgangs in einem zweiten Schaltpaket S2, und die Gangkupplungen E, F der Gangradsätze G3, G5 des dritten und des fünften Vorwärtsgangs in einem dritten Schaltpaket S3 angeordnet.

Beide Eingangswellen GE1, GE2 sind durch ein vorliegend beispielhaft als eine Klauenkupplung ausgebildetes und getriebeextern angeordnetes Koppel-Schaltelement SK miteinander koppelbar. Zudem ist eine zweite Elektromaschine EM2 vorgesehen, die leistungsschwächer als die erste Elektromaschine EM1 ausgebildet ist, die axial zwischen der Trennkupplung K1 und dem Koppel-Schaltelement SK angeordnet ist, und deren Rotor 5 hier beispielhaft unmittelbar mit der ersten Eingangswelle GE1 in Triebverbindung steht.

Die zweite Elektromaschine EM2 kann im Motorbetrieb zumindest kurzzeitig ein Drehmoment über einen geschalteten Gangradsatz R, G1, G3, G5 der ersten Gruppe auf die Ausgangswelle GA übertragen, wodurch ein Gangwechsel insbesondere während eines Elektrofahrbetriebs mit der ersten Elektromaschine EM1 ohne Zugkraftunterbrechung durchführbar ist. Des weiteren können bei einem Gangwechsel die Gangkupplungen C, D, E, F der Gangradsätze R, G1, G3, G5 der ersten Gruppe mittels der zweiten Elektromaschine EM2 synchronisiert werden, so dass diese Gangkupplungen C, D, E, F als kostengünstige Klauenkupplungen ausgebildet sind. Daneben kann die zweite Elektromaschine EM2 zumindest kurzzeitig auch im Boost-Betrieb und im Elektrofahrbetrieb zur Unterstützung der ersten Elektromaschine EM1 eingesetzt werden.

In Fig. 2 ist in schematischer Form ein weiterer Hybridantrieb 1.2 gemäß der Erfindung dargestellt, der ein anders aufgebautes Schaltgetriebe 2.2 mit zwei Eingangswellen GE1, GE2 und einer gemeinsamen Ausgangswelle GA umfasst. Die erste Eingangswelle GE1 ist über eine vorliegend beispielhaft als eine Klauenkupplung ausgebildete Trennkupplung K1 mit der Triebwelle 3 eines Verbrennungsmotors VM verbindbar. Die zweite Eingangswelle GE2 steht unmittelbar mit dem Rotor 4 einer ersten Elektromaschine EM1 in Triebverbindung. Beide Eingangswellen GE1, GE2 sind kolinear sowie axial benachbart zueinander angeordnet und über ein als ein- und ausrückbare Schaltkupplung A ausgebildetes Koppel-Schaltelement SK miteinander koppelbar.

Die zweite Eingangswelle GE2 ist über einen ersten Gangradsatz Z1 und einen zweiten Gangradsatz Z2 selektiv mit der achsparallel zu den beiden Eingangswellen GE1, GE2 angeordneten Ausgangswelle GA verbindbar. Der erste Gangradsatz Z1 und der zweite Gangradsatz Z2 bestehen jeweils aus einem drehfest auf der zweiten Eingangswelle GE2 angeordneten Festrad z11, z12 und einem drehbar auf der Ausgangswelle GA gelagerten sowie über eine ein- und ausrückbare Gangkupplung C, D mit dieser verbindbaren Losrad z21, z22. Die beiden Gangkupplungen C, D sind in einem gemeinsamen Schaltpaket S2 zusammengefasst und somit wechselweise ein- und ausrückbar.

Die erste Eingangswelle GE1 ist über einen dritten Gangradsatz Z3 mit der Ausgangswelle GA verbindbar. Der dritte Gangradsatz besteht aus einem drehbar auf der ersten Eingangswelle GE1 gelagerten und über eine ein- und ausrückbare Gangkupplung B mit dieser verbindbaren Losrad z13 sowie einem drehfest auf der Ausgangswelle GA angeordneten Festrad z23. Das durch die Schaltkupplung A gebildete Koppel-Schaltelement SK zur Kopplung der beiden Eingangswellen GE1, GE2 und die Gangkupplung zur Schaltung des dritten Gangradsatzes Z3 sind in einem gemeinsamen Schaltpaket S1 zusammengefasst und somit wechselweise einund ausrückbar. Zudem steht die erste Eingangswelle GE1 unmittelbar mit dem Rotor 5 einer zweiten Elektromaschine EM2 in Triebverbindung, die leistungsschwächer als die erste Elektromaschine EM1 ausgebildet und axial zwischen der Trennkupplung K1 und dem dritten Gangradsatz Z3 angeordnet ist.

Die Ausgangswelle GA steht über einen Ausgangsradsatz Z4, der aus zwei Festrädern z24, z34 besteht, mit einem Achsdifferenzial 6 in Triebverbindung. Zwei mit jeweils einem Fahrzeugrad 8a, 8b einer Antriebsachse verbundene Achswellen 7a, 7b sind drehfest mit jeweils einem Abtriebszahnrad des Achsdifferenzials 6 verbunden. Wie in Fig. 2 und anhand der in der Tabelle von Fig. 2b beispielhaft angegeben Zähnezahlen n_{Z} und Übersetzungen i erkennbar ist, bildet der erste Gangradsatz Z1 den ersten Gang G1, der zweite Gangradsatz Z2 den dritten Gang G3, und der dritte Gangradsatz Z3 den zweiten Gang G2 des Schaltgetriebes 4. Die Gangradsätze Z1, Z2, Z3 sind den Eingangswellen GE1, GE2 somit wechselweise in der Reihenfolge ihrer Übersetzungen zugeordnet. Ein Rückwärtsfahrbetrieb wird durch eine Drehrichtungsumkehr der Elektromaschine EM1 oder EM2 realisiert.

Der Hybridantrieb 1.2 nach Fig. 2 weist für den Elektrofahrbetrieb zwei Gänge G1, G3 (Schaltkupplung A bzw. Koppel-Schaltelement SK ausgerückt) und für den Verbrennungsfahrbetrieb drei Gänge G1, G2, G3 (Schaltkupplung A bzw. Koppel-Schaltelement SK zumindest bei G1, G3 eingerückt) auf. Zudem ist im Verbrennungsfahrbetrieb in allen Gängen G1, G2, G3 ein Boostbetrieb und ein Rekuperationsbetrieb mit der ersten Elektromaschine EM1 und/oder der zweiten Elektromaschine EM2 möglich.

Des weiteren kann ein mit der ersten Elektromaschine EM1 und/oder der zweiten Elektromaschine EM2 elektrisch verbundener elektrischer Energiespeicher auch bei Fahrzeugstillstand durch den antreibenden Verbrennungsmotor VM geladen werden. Der Verbrennungsmotor VM kann bei Fahrzeugstillstand sowohl durch die erste Elektromaschine EM1 (Gänge G1, G2, G3 ausgelegt, Schaltkupplung A bzw. Koppel-Schaltelement SK eingerückt) als auch durch die zweite Elektromaschine EM2 (Gang G2 ausgelegt, Schaltkupplung A bzw. Koppel-Schaltelement SK ausgerückt) in einem Normalstart gestartet werden. Ebenso kann die Gangkupplung B des dritten Gangradsatzes Z3 bzw. des zweiten Gangs G2 bei geöffneter Trennkupplung K1 durch die zweite Elektromaschine synchronisiert werden. Auch kann der Verbrennungsmotor VM während eines Elektrofahrbetriebs mit der ersten Elektromaschine EM1 (G1 oder G3 eingelegt, Schaltkupplung A bzw. Koppel-Schaltelement SK ausgerückt) bei geschlossener Trennkupplung K1 durch die zweite Elektromaschine EM2 in einem Normalstart gestartet werden.

Der wesentliche Vorteil der zweiten Elektromaschine EM2 besteht jedoch darin, dass während eines Elektrofahrbetriebs mit der ersten Elektromaschine EM1 (G1 oder G3 eingelegt, Schaltkupplung A bzw. Koppel-Schaltelement SK ausgerückt) ein Gangwechsel zwischen den beiden Gängen G1, G3 bei eingelegtem zweiten Gang G2 durch die Abgabe eines entsprechenden Drehmomentes durch die zweite Elektromaschine EM2 ohne Zugkraftunterbrechung durchführbar ist. Für einen Elektrofahrbetrieb sind die verwendeten drei Gänge G1, G2, G3 und Schaltstellungen der Schaltkupplung A sowie der Gangkupplungen B, C, D in der Tabelle von Fig. 2a zusammengefasst. Das Bezugszeichen N steht dort für eine Neutral-Stellung des jeweiligen Schaltpakets S1 oder S2.

### Bezugszeichen

- 1.1: Erster Hybridantrieb
- 1.2: Zweiter Hybridantrieb
- 2.1: Erstes Schaltgetriebe
- 2.2: Zweites Schaltgetriebe
- 3: Triebwelle von VM
- 4: Rotor von EM1
- 5: Rotor von EM2
- 6: Achsdifferenzial
- 7a, 7b: Achswelle
- 8a, 8b: Fahrzeugsrad
- A: Gangkupplung von G2, Schaltstellung von S1
- B: Gangkupplung von G4; Z3, Schaltstellung von S1
- C: Gangkupplung von R; Z1, Schaltstellung von S2
- D: Gangkupplung von G1; Z2, Schaltstellung von S2
- E: Gangkupplung von G3
- EM1: Erste Elektromaschine
- EM2: Zweite Elektromaschine
- F: Gangkupplung von G5
- G1 - G5: Gangradsätze der Vorwärtsgänge
- G1 - G3: Gänge
- GA: Ausgangswelle
- GE1: Erste Eingangswelle
- GE2: Zweite Eingangswelle
- i: Übersetzung
- K1: Trennkupplung
- N: Neutralstellung
- n_{Z}: Zähnezahl
- R: Umkehr-Gangradsatz des Rückwärtsgangs
- S1 - S3: Schaltpakete
- SK: Koppel-Schaltelement
- VM: Verbrennungsmotor
- Z1: Erster Gangradsatz von 2.2
- Z2: Zweiter Gangradsatz von 2.2
- Z3: Dritter Gangradsatz von 2.2
- Z4: Ausgangsradsatz von 2.2
- z11: Antriebsrad, Festrad von Z1
- z12: Antriebsrad, Festrad von Z2
- z13: Antriebsrad, Losrad von Z3
- z21: Abtriebsrad, Losrad von Z1
- z22: Abtriebsrad, Losrad von Z2
- z23: Abtriebsrad, Festrad von Z3
- z24: Antriebsrad, Festrad von Z4
- z34: Abtriebsrad, Festrad von Z4

## Patentansprüche

1. Hybridantrieb eines Kraftfahrzeugs, der ein automatisiertes Schaltgetriebe (2.1, 2.2) mit zwei Eingangswellen (GE1, GE2) und einer gemeinsamen Ausgangswelle (GA) umfasst, dessen erste Eingangswelle (GE1) über eine Trennkupplung (K1) mit der Triebwelle (3) eines Verbrennungsmotors (VM) verbindbar und über eine erste Gruppe selektiv schaltbarer Gangradsätze (G1, G3, G5, R; Z3) mit der Ausgangswelle (GA) in Triebverbindung bringbar ist, dessen zweite Eingangswelle (GE2) mit dem Rotor (4) einer als Motor und als Generator betreibbaren Elektromaschine (EM1) in Triebverbindung steht und über eine zweite Gruppe selektiv schaltbarer Gangradsätze (G2, G4; Z1, Z2) mit der Ausgangswelle (GA) in Triebverbindung bringbar ist, und dessen Eingangswellen (GE1, GE2) über ein einrückbares und ausrückbares Koppel-Schaltelement (SK) miteinander koppelbar sind, **dadurch gekennzeichnet, dass** eine als Motor und als Generator betreibbare zweite Elektromaschine (EM2) vorgesehen ist, deren Rotor (5) mit der ersten Eingangswelle (GE1) in Triebverbindung steht, wobei die zweite Elektromaschine (EM2) als ein Starter-Generator ausgebildet ist, der leistungsschwächer als die erste Elektromaschine (EM1) ausgebildet und nur kurzzeitig als Motor betreibbar ist.

2. Hybridantrieb nach Anspruch 1, **dadurch gekennzeichnet, dass** der Rotor (5) der zweiten Elektromaschine (EM2) unmittelbar oder über eine Eingangsgetriebestufe mit der ersten Eingangswelle (GE1) in Triebverbinndung steht.

3. Verfahren zur Steuerung eines Hybridantriebs (1.1, 1.2) eines Kraftfahrzeugs, der ein automatisiertes Schaltgetriebe (2.1, 2.2) mit zwei Eingangswellen (GE1, GE2) und einer gemeinsamen Ausgangswelle (GA) umfasst, dessen erste Eingangswelle (GE1) über eine Trennkupplung (K1) mit der Triebwelle (3) eines Verbrennungsmotors (VM) verbindbar und über eine erste Gruppe selektiv schaltbarer Gangradsätze (G1, G3, G5, R; Z3) mit der Ausgangswelle (GA) in Triebverbindung bringbar ist, dessen zweite Eingangswelle (GE2) mit dem Rotor (4) einer als Motor und als Generator betreibbaren Elektromaschine (EM1) in Triebverbindung steht und über eine zweite Gruppe selektiv schaltbarer Gangradsätze (G2, G4; Z1, Z2) mit der Ausgangswelle (GA) in Triebverbindung bringbar ist, und dessen Eingangswellen (GE1, GE2) über ein einrückbares und ausrückbares Koppel-Schalt-element (SK) miteinander koppelbar sind, wobei ein Gangwechsel in dem Schaltgetriebe (2.1, 2.2) während eines Elektrofahrbetriebs ohne Zugkraftunterbrechung erfolgt, wobei während des Gangwechsels eine als Motor und als Generator betreibbare zweite Elektromaschine (EM2), deren Rotor (5) mit der ersten Eingangswelle (GE1) in Triebverbindung steht, bei geöffnetem Koppel-Schaltelement (SK) über einen eingelegten Gangradsatz (G1, G3, G5, R; Z3) der ersten Gruppe zumindest kurzzeitig ein Drehmoment auf die Ausgangswelle (GA) überträgt, **dadurch gekennzeichnet, dass** bei einem Elektrofahrbetrieb mit der ersten Elektromaschine (EM1) in einem Last-Gangradsatz (z.B. G2; Z1) der zweiten Gruppe ein Gangwechsel in einen Ziel-Gangradsatz (z.B. G3; Z3) der ersten Gruppe mit den folgenden Schritten erfolgt:
a) Ausrücken des Koppel-Schaltelementes (SK), sofern dieses eingerückt ist,
b) Synchronisieren der Gangkupplung (E; B) des Ziel-Gangradsatzes (G3; Z3) mittels der zweiten Elektromaschine (EM2),
c) Einrücken der Gangkupplung (E; B) des Ziei-Gangradsatzes (G3; Z3),
d) zeitgleicher Lastabbau an der ersten Elektromaschine (EM1) und Lastaufbau an der zweiten Elektromaschine (EM2),
e) Ausrücken der Gangkupplung (A; C) des Last-Gangradsatzes (G2; Z1),
f) Synchronisieren des Koppel-Schaltelementes (SK) mittels der ersten Elektromaschine (EM1),
g) Einrücken des Koppel-Schaltelementes (SK), und
h) zeitgleicher Lastabbau an der zweiten Elektromaschine (EM2) und Lastaufbau an der ersten Elektromaschine (EM1).

4. Verfahren nach Anspruch 3, **dadurch gekennzeichnet, dass** bei einem Elektrofahrbetrieb mit der ersten Elektromaschine (EM1) in einem Last-Gangradsatz (z.B. G3; Z3) der ersten Gruppe ein Gangwechsel in einen Ziel-Gangradsatz (z.B. G4; Z2) der zweiten Gruppe mit den folgenden Schritten erfolgt:
a) Zeitgleicher Lastabbau an der ersten Elektromaschine (EM1) und Lastaufbau an der zweiten Elektromaschine (EM2),
b) Ausrücken des Koppel-Schaltelementes (SK),
c) Synchronisieren der Gangkupplung (B; D) des Ziel-Gangradsatzes (G4; Z2) mittels der ersten Elektromaschine (EM1),
d) Einrücken der Gangkupplung (B; D) des Ziel-Gangradsatzes (G4; Z2),
e) zeitgleicher Lastabbau an der zweiten Elektromaschine (EM2) und Lastaufbau an der ersten Elektromaschine (EM1), und
f) Ausrücken der Gangkupplung (E; B) des Last-Gangradsatzes (G3; Z3).

5. Verfahren nach Anspruch 3 oder 4, **dadurch gekennzeichnet, dass** bei einem Elektrofahrbetrieb mit der ersten Elektromaschine (EM1) in einem Last-Gangradsatz (z.B. G2; Z1) der zweiten Gruppe ein Gangwechsel in einen Ziel-Gangradsatz (z.B. G4; Z2) der zweiten Gruppe mit den folgenden Schritten erfolgt:
a) Ausrücken des Koppel-Schaltelementes (SK), sofern dieses eingerückt ist,
b) Synchronisieren der Gangkupplung (E; B) eines Zwischen-Gangradsatzes (z.B. G3; Z3) der ersten Gruppe mittels der zweiten Elektromaschine (EM2),
c) Einrücken der Gangkupplung (E; B) des Zwischen-Gangradsatzes (G3; Z3),
d) zeitgleicher Lastabbau an der ersten Elektromaschine (EM1) und Lastaufbau an der zweiten Elektromaschine (EM2),
e) Ausrücken der Gangkupplung (A; C) des Last-Gangradsatzes (G2; Z1),
f) Synchronisieren der Gangkupplung (B; D) des Ziel-Gangradsatzes (G4; Z2) mittels der ersten Elektromaschine (EM1),
g) Einrücken der Gangkupplung (B; D) des Ziel-Gangradsatzes (G4; Z2),
h) zeitgleicher Lastabbau an der zweiten Elektromaschine (EM2) und Lastaufbau an der ersten Elektromaschine (EM1), und
i) Ausrücken der Gangkupplung (E; B) des Zwischen-Gangradsatzes (G3; Z3).

6. Verfahren nach einem der Ansprüche 3 bis 5, **dadurch gekennzeichnet, dass** bei einem Elektrofahrbetrieb mit der ersten Elektromaschine (EM1) in einem Last-Gangradsatz (z.B. G3) der ersten Gruppe ein Gangwechsel in einen Ziel-Gangradsatz (z.B. G5) der ersten Gruppe mit den folgenden Schritten erfolgt:
a) Zeitgleicher Lastabbau an der ersten Elektromaschine (EM1) und Lastaufbau an der zweiten Elektromaschine (EM2),
b) Ausrücken des Koppel-Schaltelementes (SK),
c) Synchronisieren der Gangkupplung (B) eines Zwischen-Gangradsatzes (z.B. G4) der zweiten Gruppe mittels der ersten Elektromaschine (EM1),
d) Einrücken der Gangkupplung (B) des Zwischen-Gangradsatzes (G4),
e) zeitgleicher Lastabbau an der zweiten Elektromaschine (EM2) und Lastaufbau an der ersten Elektromaschine (EM1),
f) Ausrücken der Gangkupplung (E) des Last-Gangradsatzes (G3),
g) Synchronisieren der Gangkupplung (F) des Ziel-Gangradsatzes (G5) mittels der zweiten Elektromaschine (EM2),
h) Einrücken der Gangkupplung (F) des Ziel-Gangradsatzes (G5),
i) zeitgleicher Lastabbau an der ersten Elektromaschine (EM1) und Lastaufbau an der zweiten Elektromaschine (EM2),
j) Ausrücken der Gangkupplung (B) des Zwischen-Gangradsatzes (G4),
k) Synchronisieren des Koppel-Schaltelementes (SK) mittels der ersten Elektromaschine (EM1),
l) Einrücken des Koppel-Schaltelementes (SK), und
m) zeitgleicher Lastabbau an der zweiten Elektromaschine (EM2) und Lastaufbau an der ersten Elektromaschine (EM1).

7. Verfahren nach einem der Ansprüche 3 bis 6, **dadurch gekennzeichnet, dass** bei einem Elektrofahrbetrieb mit der ersten Elektromaschine (EM1) in einem Gangradsatz (G2, G4; Z1, Z2) der zweiten Gruppe das Starten des Verbrennungsmotors (VM) bei ausgerücktem Koppel-Schaltelement (SK) und geschlossener Trennkupplung (K1) mittels der zweiten Elektromaschine (EM2) erfolgt.

8. Verfahren nach einem der Ansprüche 3 bis 7, **dadurch gekennzeichnet, dass** in einem seriellen Hybridfahrbetrieb die zweite Elektromaschine (EM2) bei ausgerücktem Koppel-Schaltelement (SK) und geschlossener Trennkupplung (K1) im Generatorbetrieb von dem Verbrennungsmotor (VM) angetrieben wird, und die erste Elektromaschine (EM1) im Motorbetrieb über einen geschalteten Gangradsatz (G2, G4; Z1, Z2) der zweiten Gruppe die Ausgangswelle (GA) antreibt.

## Claims

1. Hybrid drive of a motor vehicle which comprises an automated change-speed gearbox (2.1, 2.2) with two input shafts (GE1, GE2) and a common output shaft (GA), the first input shaft (GE1) of which can be connected via a separating clutch (K1) to the drive shaft (3) of an internal combustion engine (VM) and can be drive-connected to the output shaft (GA) via a first group of selectively shiftable gear sets (G1, G3, G5, R; Z3), the second input shaft (GE2) of which is drive-connected to the rotor (4) of an electric machine (EM1) which can be operated as a motor and as a generator, and can be drive-connected to the output shaft (GA) via a second group of selectively shiftable gear sets (G2, G4; Z1, Z2), and the input shafts (GE1, GE2) of which can be coupled to one another via a coupling shift element (SK) which can be engaged and disengaged, **characterized in that** a second electric machine (EM2) which can be operated as a motor and as a generator is provided, the rotor (5) of which electric machine (EM2) is drive-connected to the first input shaft (GE1), the second electric machine (EM2) being configured as a starter generator which is of less powerful configuration than the first electric machine (EM1) and can be operated only briefly as a motor.

2. Hybrid drive according to Claim 1, **characterized in that** the rotor (5) of the second electric machine (EM2) is drive-connected to the first input shaft (GE1) directly or via an input gear stage.

3. Method for controlling a hybrid drive (1.1, 1.2) of a motor vehicle, which hybrid drive (1.1, 1.2) comprises an automated change-speed gearbox (2.1, 2.2) with two input shafts (GE1, GE2) and a common output shaft (GA), the first input shaft (GE1) of which can be connected via a separating clutch (K1) to the drive shaft (3) of an internal combustion engine (VM) and can be drive-connected to the output shaft (GA) via a first group of selectively shiftable gear sets (G1, G3, G5, R; Z3), the second input shaft (GE2) of which is drive-connected to the rotor (4) of an electric machine (EM1) which can be operated as a motor and as a generator, and can be drive-connected to the output shaft (GA) via a second group of selectively shiftable gear sets (G2, G4; Z1, Z2), and the input shafts (GE1, GE2) of which can be coupled to one another via a coupling shift element (SK) which can be engaged and disengaged, a gear change taking place in the change-speed gearbox (2.1, 2.2) during electric driving operation without an interruption in the traction force, a second electric machine (EM2) which can be operated as a motor and as a generator and the rotor (5) of which is drive-connected to the first input shaft (GE1) transmitting a torque to the output shaft (GA) at least briefly via an engaged gear set (G1, G3, G5, R; Z3) of the first group during the gear change when the coupling shift element (SK) is open, **characterized in that**, during electric driving operation by way of the first electric machine (EM1) in a load gear set (for example, G2; Z1) of the second group, a gear change into a target gear set (for example, G3; Z3) of the first group takes place by way of the following steps:
a) disengaging of the coupling shift element (SK) if it is engaged,
b) synchronizing of the gear clutch (E; B) of the target gear set (G3; Z3) by means of the second electric machine (EM2),
c) engaging of the gear clutch (E; B) of the target gear set (G3; Z3),
d) simultaneous load dissipation at the first electric machine (EM1) and load build-up at the second electric machine (EM2),
e) disengaging of the gear clutch (A; C) of the load gear set (G2; Z1),
f) synchronizing of the coupling shift element (SK) by means of the first electric machine (EM1),
g) engaging of the coupling shift element (SK), and
h) simultaneous load dissipation at the second electric machine (EM2) and load build-up at the first electric machine (EM1).

4. Method according to Claim 3, **characterized in that**, during electric driving operation by way of the first electric machine (EM1) in a load gear set (for example, G3; Z3) of the first group, a gear change into a target gear set (for example, G4; Z2) of the second group takes place by way of the following steps:
a) simultaneous load dissipation at the first electric machine (EM1) and load build-up at the second electric machine (EM2),
b) disengaging of the coupling shift element (SK),
c) synchronizing of the gear clutch (B; D) of the target gear set (G4; Z2) by means of the first electric machine (EM1),
d) engaging of the gear clutch (B; D) of the target gear set (G4; Z2),
e) simultaneous load dissipation at the second electric machine (EM2) and load build-up at the first electric machine (EM1), and
f) disengaging of the gear clutch (E; B) of the load gear set (G3; Z3).

5. Method according to Claim 3 or 4, **characterized in that**, during electric driving operation by way of the first electric machine (EM1) in a load gear set (for example, G2; Z1) of the second group, a gear change into a target gear set (for example, G4; Z2) of the second group takes place by way of the following steps:
a) disengaging of the coupling shift element (SK) if it is engaged,
b) synchronizing of the gear clutch (E; B) of an intermediate gear set (for example, G3; Z3) of the first group by means of the second electric machine (EM2),
c) engaging of the gear clutch (E; B) of the intermediate gear set (G3; Z3),
d) simultaneous load dissipation at the first electric machine (EM1) and load build-up at the second electric machine (EM2),
e) disengaging of the gear clutch (A; C) of the load gear set (G2; Z1),
f) synchronizing of the gear clutch (B; D) of the target gear set (G4; Z2) by means of the first electric machine (EM1),
g) engaging of the gear clutch (B; D) of the target gear set (G4; Z2),
h) simultaneous load dissipation at the second electric machine (EM2) and load build-up at the first electric machine (EM1), and
i) disengaging of the gear clutch (E; B) of the intermediate gear set (G3; Z3).

6. Method according to one of Claims 3 to 5, **characterized in that**, during electric driving operation by way of the first electric machine (EM1) in a load gear set (for example, G3) of the first group, a gear change into a target gear set (for example, G5) of the first group takes place by way of the following steps:
a) simultaneous load dissipation at the first electric machine (EM1) and load build-up at the second electric machine (EM2),
b) disengaging of the coupling shift element (SK),
c) synchronizing of the gear clutch (B) of an intermediate gear set (for example, G4) of the second group by means of the first electric machine (EM1),
d) engaging of the gear clutch (B) of the intermediate gear set (G4),
e) simultaneous load dissipation at the second electric machine (EM2) and load build-up at the first electric machine (EM1),
f) disengaging of the gear clutch (E) of the load gear set (G3),
g) synchronizing of the gear clutch (F) of the target gear set (G5) by means of the second electric machine (EM2),
h) engaging of the gear clutch (F) of the target gear set (G5),
i) simultaneous load dissipation at the first electric machine (EM1) and load build-up at the second electric machine (EM2),
j) disengaging of the gear clutch (B) of the intermediate gear set (G4),
k) synchronizing of the coupling shift element (SK) by means of the first electric machine (EM1),
l) engaging of the coupling shift element (SK), and
m) simultaneous load dissipation at the second electric machine (EM2) and load build-up at the first electric machine (EM1).

7. Method according to one of Claims 3 to 6, **characterized in that**, during electric driving operation by way of the first electric machine (EM1) in a gear set (G2, G4; Z1, Z2) of the second group, starting of the internal combustion engine (VM) takes place by means of the second electric machine (EM2) when the coupling shift element (SK) is disengaged and the separating clutch (K1) is closed.

8. Method according to one of Claims 3 to 7, **characterized in that**, during serial hybrid driving operation, the second electric machine (EM2) is driven in generator operation by the internal combustion engine (VM) when the coupling shift element (SK) is disengaged and the separating clutch (K1) is closed, and the first electric machine (EM1) drives the output shaft (GA) in motor operation via a connected gear set (G2, G4; Z1, Z2) of the second group.

## Revendications

1. Groupe propulseur hybride d'un véhicule automobile, lequel comprend une boîte de vitesses automatisée (2.1, 2.2) pourvue de deux arbres d'entrée (GE1, GE2) et d'un arbre de sortie (GA) commun, dont le premier arbre d'entrée (GE1) peut être relié par le biais d'un accouplement de séparation (K1) à l'arbre moteur (3) d'un moteur à combustion interne (VM) et peut être amené en liaison motrice avec l'arbre de sortie (GA) par le biais d'un premier groupe de jeux de pignons récepteurs (G1, G3, G5, R ; Z3) à changement de rapport sélectif, dont le deuxième arbre d'entrée (GE2) se trouve en liaison motrice avec le rotor (4) d'une machine électrique (EM1) pouvant fonctionner en tant que moteur et que générateur et peut être amené en liaison motrice avec l'arbre de sortie (GA) par le biais d'un deuxième groupe de jeux de pignons récepteurs (G2, G4 ; Z1, Z2) à changement de rapport sélectif, et dont les arbres d'entrée (GE1, GE2) peuvent être accouplés ensemble par le biais d'un élément de couplage/changement de rapport (SK) embrayable et débrayable, **caractérisé en ce qu'**il existe une deuxième machine électrique (EM2) pouvant fonctionner en tant que moteur et que générateur, dont le rotor (5) se trouve en liaison motrice avec le premier arbre d'entrée (GE1), la deuxième machine électrique (EM2) étant réalisée sous la forme d'un démarreur/générateur qui est moins puissant que la première machine électrique (EM1) et qui ne peut fonctionner en tant que moteur que pendant une courte durée.

2. Groupe propulseur hybride selon la revendication 1, **caractérisé en ce que** le rotor (5) de la deuxième machine électrique (EM2) se trouve en liaison motrice directe ou par le biais d'un étage d'engrenage d'entrée avec le premier arbre d'entrée (GE1).

3. Procédé de commande d'un groupe propulseur hybride (1.1, 1.2) d'un véhicule automobile, lequel comprend une boîte de vitesses automatisée (2.1, 2.2) pourvue de deux arbres d'entrée (GE1, GE2) et d'un arbre de sortie (GA) commun, dont le premier arbre d'entrée (GE1) peut être relié par le biais d'un accouplement de séparation (K1) à l'arbre moteur (3) d'un moteur à combustion interne (VM) et peut être amené en liaison motrice avec l'arbre de sortie (GA) par le biais d'un premier groupe de jeux de pignons récepteurs (G1, G3, G5, R ; Z3) à changement de rapport sélectif, dont le deuxième arbre d'entrée (GE2) se trouve en liaison motrice avec le rotor (4) d'une machine électrique (EM1) pouvant fonctionner en tant que moteur et que générateur et peut être amené en liaison motrice avec l'arbre de sortie (GA) par le biais d'un deuxième groupe de jeux de pignons récepteurs (G2, G4 ; Z1, Z2) à changement de rapport sélectif, et dont les arbres d'entrée (GE1, GE2) peuvent être accouplés ensemble par le biais d'un élément de couplage/changement de rapport (SK) embrayable et débrayable, un changement de rapport dans la boîte de vitesses (2.1, 2.2) pendant un régime de déplacement électrique ayant lieu sans interruption de la force de traction, pendant le changement de rapport, une deuxième machine électrique (EM2) pouvant fonctionner en tant que moteur et que générateur, dont le rotor (5) se trouve en liaison motrice avec le premier arbre d'entrée (GE1), transmettant au moins pendant une courte durée un couple à l'arbre de sortie (GA) lorsque l'élément de couplage/changement de rapport (SK) est ouvert par le biais d'un jeu de pignons récepteurs (G1, G3, G5, R ; Z3) engagé du premier groupe, **caractérisé en ce que** lors d'un régime de déplacement électrique avec la première machine électrique (EM1) dans un jeu de pignons récepteurs de charge (par exemple G2 ; Z1) du deuxième groupe, un changement de rapport en un jeu de pignons récepteurs cible (par exemple G3 ; Z3) du premier groupe est réalisé avec les étapes suivantes :
a) débrayage de l'élément de couplage/changement de rapport (SK), dans la mesure où celui-ci est embrayé,
b) synchronisation de l'accouplement de rapport (E ; B) du jeu de pignons récepteurs cible (G3 ; Z3) au moyen de la deuxième machine électrique (EM2),
c) embrayage de l'accouplement de rapport (E ; B) du jeu de pignons récepteurs cible (G3 ; 23),
d) simultanément réduction de charge au niveau de la première machine électrique (EM1) et mise en charge de la deuxième machine électrique (EM2),
e) débrayage de l'accouplement de rapport (A ; C) du jeu de pignons récepteurs de charge (G2 ; Z1),
f) synchronisation de l'élément de couplage/changement de rapport (SK) au moyen de la première machine électrique (EM1),
g) embrayage de l'élément de couplage/changement de rapport (SK), et
h) simultanément réduction de charge au niveau de la deuxième machine électrique (EM2) et mise en charge de la première machine électrique (EM1).

4. Procédé selon la revendication 3, **caractérisé en ce que** lors d'un régime de déplacement électrique avec la première machine électrique (EM1) dans un jeu de pignons récepteurs de charge (par exemple G3 ; Z3) du premier groupe, un changement de rapport en un jeu de pignons récepteurs cible (par exemple G4 ; Z2) du deuxième groupe est réalisé avec les étapes suivantes :
a) simultanément réduction de charge au niveau de la première machine électrique (EM1) et mise en charge de la deuxième machine électrique (EM2),
b) débrayage de l'élément de couplage/changement de rapport (SK),
c) synchronisation de l'accouplement de rapport (B ; D) du jeu de pignons récepteurs cible (G4 ; Z2) au moyen de la première machine électrique (EM1),
d) embrayage de l'accouplement de rapport (B ; D) du jeu de pignons récepteurs cible (G4 ; Z2),
e) simultanément réduction de charge au niveau de la deuxième machine électrique (EM2) et mise en charge de la première machine électrique (EM1), et
f) débrayage de l'accouplement de rapport (E ; B) du jeu de pignons récepteurs de charge (G3 ; Z3).

5. Procédé selon la revendication 3 ou 4, **caractérisé en ce que** lors d'un régime de déplacement électrique avec la première machine électrique (EM1) dans un jeu de pignons récepteurs de charge (par exemple G2 ; Z1) du deuxième groupe, un changement de rapport en un jeu de pignons récepteurs cible (par exemple G4 ; Z2) du deuxième groupe est réalisé avec les étapes suivantes :
a) débrayage de l'élément de couplage/changement de rapport (SK), dans la mesure où celui-ci est embrayé,
b) synchronisation de l'accouplement de rapport (E ; B) d'un jeu de pignons récepteurs intermédiaire (par exemple G3 ; Z3) du premier groupe au moyen de la deuxième machine électrique (EM2),
c) embrayage de l'accouplement de rapport (E ; B) du jeu de pignons récepteurs intermédiaire (G3 ; Z3),
d) simultanément réduction de charge au niveau de la première machine électrique (EM1) et mise en charge de la deuxième machine électrique (EM2),
e) débrayage de l'accouplement de rapport (A ; C) du jeu de pignons récepteurs de charge (G2 ; Z1),
f) synchronisation de l'accouplement de rapport (B ; D) du jeu de pignons récepteurs cible (G4 ; Z2) au moyen de la première machine électrique (EM1),
g) embrayage de l'accouplement de rapport (B ; D) du jeu de pignons récepteurs cible (G4 ; Z2),
h) simultanément réduction de charge au niveau de la deuxième machine électrique (EM2) et mise en charge de la première machine électrique (EM1), et
i) débrayage de l'accouplement de rapport (E ; B) du jeu de pignons récepteurs intermédiaire (G3 ; Z3).

6. Procédé selon l'une des revendications 3 à 5, **caractérisé en ce que** lors d'un régime de déplacement électrique avec la première machine électrique (EM1) dans un jeu de pignons récepteurs de charge (par exemple G3) du premier groupe, un changement de rapport en un jeu de pignons récepteurs cible (par exemple G5) du premier groupe est réalisé avec les étapes suivantes :
a) simultanément réduction de charge au niveau de la première machine électrique (EM1) et mise en charge de la deuxième machine électrique (EM2),
b) débrayage de l'élément de couplage/changement de rapport (SK),
c) synchronisation de l'accouplement de rapport (B) d'un jeu de pignons récepteurs intermédiaire (par exemple G4) du deuxième groupe au moyen de la première machine électrique (EM1),
d) embrayage de l'accouplement de rapport (B) du jeu de pignons récepteurs intermédiaire (G4),
e) simultanément réduction de charge au niveau de la deuxième machine électrique (EM2) et mise en charge de la première machine électrique (EM1),
f) débrayage de l'accouplement de rapport (E) du jeu de pignons récepteurs de charge (G3),
g) synchronisation de l'accouplement de rapport (F) du jeu de pignons récepteurs cible (G5) au moyen de la deuxième machine électrique (EM2),
h) embrayage de l'accouplement de rapport (F) du jeu de pignons récepteurs cible (G5),
i) simultanément réduction de charge au niveau de la première machine électrique (EM1) et mise en charge de la deuxième machine électrique (EM2),
j) débrayage de l'accouplement de rapport (B) du jeu de pignons récepteurs intermédiaire (G4),
k) synchronisation de l'élément de couplage/changement de rapport (SK) au moyen de la première machine électrique (EM1),
l) embrayage de l'élément de couplage/changement de rapport (SK), et
m) simultanément réduction de charge au niveau de la deuxième machine électrique (EM2) et mise en charge de la première machine électrique (EM1).

7. Procédé selon l'une des revendications 3 à 6, **caractérisé en ce que** lors d'un régime de déplacement électrique avec la première machine électrique (EM1) dans un jeu de pignons récepteurs (G2, G4 ; Z1, Z2) du deuxième groupe, le démarrage du moteur à combustion interne (VM) est réalisé au moyen de la deuxième machine électrique (EM2) avec l'élément de couplage/changement de rapport (SK) débrayé et l'accouplement de séparation (K1) fermé.

8. Procédé selon l'une des revendications 3 à 7, **caractérisé en ce que** lors d'un régime de déplacement hybride, la deuxième machine électrique (EM2), lorsque l'élément de couplage/changement de rapport (SK) est débrayé et l'accouplement de séparation (K1) fermé, est entraînée en régime de générateur par le moteur à combustion interne (VM) et la première machine électrique (EM1) en régime de moteur entraîne l'arbre de sortie (GA) par le biais d'un jeu de pignons récepteurs (G2, G4 ; Z1, Z2) engagé du deuxième groupe.
